# EUROPEAN PATENT SPECIFICATION

(11) **EP 2 148 901 B1**
(45) Date of publication and mention of the grant of the patent: **06.03.2019**
(21) Application number: 08769553.2
(22) Date of filing: 21.05.2008
(51) Int. Cl.: C09D 11/101, C09D 11/106, C09D 11/107, C09D 11/36

(54) **NON-AQUEOUS ENERGY CURABLE POLYMERIC DISPERSION**
NICHT WÄSSRIGE ENERGIEHÄRTBARE POLYMERDISPERSION
DISPERSION POLYMÈRE NON AQUEUSE VULCANISABLE PAR ÉNERGIE

(30) Priority: 23.05.2007 US 939732 P
(43) Date of publication of application: 03.02.2010
(73) Proprietor: Sun Chemical Corporation, Parsippany, NJ 07054 (US)
(72) Inventor: DANDREAUX, Gary, F., Hackensack, NJ 07601 (US); PATEL, Bhalendra, J., Kendall Park, NJ 08824 (US)
(74) Representative: Abel & Imray
(86) International application number: PCT/US2008/064353
(87) International publication number: WO 2008/147808

(56) References cited:
- EP-A1- 1 571 187
- EP-A1- 1 696 007
- WO-A1-98/27171
- WO-A2-02/38688
- US-A- 5 262 489
- US-A- 5 849 809
- US-A1- 2006 063 857
- US-A1- 2007 058 014
- US-A1- 2007 060 667

## Description

### FIELD OF THE INVENTION

The invention relates to an energy curable ink composition containing a polymer not compatible with energy curable systems and having low viscosity, high color strength, cleaner shade and enhanced gloss.

### BACKGROUND OF THE INVENTION

Low viscosity and good flow are the most important factors affecting liquid ink behavior and improved printability. These factors are particularly important for formulating inks for ink jet and gravure printing applications.

U.S. Pat. No. 4,468,255 discloses rheology modifiers for arylide yellow pigment dispersions. The rheology modifiers which are derived from diarylide pigments improve the fluidity of non-aqueous arylide pigment dispersions prepared from either monoarylide or diarylide yellow pigments. Schwartz et al. in a series of patents (i.e., U.S. Pat. Nos. 4,946,508; 4,946,509; 5,024,698; and 5,062,894) have disclosed modified azo pigments for use in conventional, solvent and water based inks and coatings to function as rheology control agents. In each of these patents, Schwartz et al. modify an azo pigment (e.g., a diarylide pigment, a monoazo pigment, a diazo pyrazolone pigment and the like) by grafting a polyalkylene oxide to the pigment so that water based inks made from these pigment compositions exhibit high coloring strength, cleaner shades, lower rheology, and enhanced gloss compared with conventional water based inks.

To increase printing throughput, ultraviolet (UV) or electron beam (EB) curable inks have been developed that allow printers to reduce the solvent content of the ink. It is always a challenging task for a UV or EB curable liquid ink formulator to develop ink formulations with a viscosity low enough for improved flow, while at the same time maintaining other essential characteristics, such as to cure, adhesion, low odor, etc.

Traditional organic and inorganic pigments used in formulating energy curable liquid inks, are poorly dispersed in the vehicles used in the systems. As a result, poor pigment wetting leads to a thixotropic structure. If the inks are not subjected to high shear, the apparent viscosity will remain high and the ink will exhibit poor transfer resulting in poor printability. Flow additives have been tried, however, with limited success for different pigments. The situation becomes more critical in the case of cationic curable inks, where not all the pigments and additives can be used due to the presence of basic functionalities. In addition, some energy curable inks of the prior art contain fugitive solvent (such as water, alcohols and the like) as part of the vehicle to reduce viscosity, aid in pigment dispersion, and modify flow during printing. However, after printing but before curing, the fugitive solvent is typically removed to prevent interference with the curing process and to prevent it from having an adverse affect on the printed image. The curing delay required by solvent removal, as well as attendant unpleasant odors, are further undesirable limitations to printing. Furthermore, solvent removal is desirable for environmental reasons.

A UV-cured cationically polymerized printing ink is disclosed by Seng in Patent Application DE 195 00 968.1 for use in indirect letterpress printing or dry offset printing. Seng lists the differences between letterpress and flexographic printing and the list includes critical differences in ink viscosities. In particular, Seng discloses that printing inks used in flexographic printing have viscosities in the range of 0.01 to 2 cps and at 20.degree. C. in the range of 3.0 to 100.0 cps, and more preferably in the range of 4.0 to 10 cps. Seng's inks are cationically polymerized and differ from the very high viscosity printing inks used in indirect letterpress printing in solvent content. While inks of this viscosity range are useful in high shear, indirect letterpress printing, such inks have high tack which causes them to be unsuitable for low shear applications such as flexography, which requires low tack inks.

U.S. Patent 4,885,332 discloses a photocurable abrasion resistant coating compositions comprising a non-aqueous dispersion of colloidal silica in polyethylenically-unsaturated monomer.

U.S. Pat. No. 5,641,346 teaches an ink jet ink that includes a colorant and a liquid component containing at least one of an epoxy and a vinyl ether. Water is dissolved in the liquid component. Preferably, the vinyl ether is ethylene glycol monovinyl ether. The ink jet recording process includes the steps of ejecting an ink jet ink from an orifice to form an image on a recording medium.

U.S. Pat. No. 5,275,646 discloses an energy curable conductive ink jet formulation patent disclosed a conductive ink and a method of ink jet printing with a conductive ink, containing a polar conductive material. The reference also teaches formulating non-conductive ink jet formulations.

U.S. Patent 6,467,897 describes compositions that incorporate surface modified, nanometer sized, inorganic oxide particles into energy curable fluids. The surface modification aspect allows the compatibility between the particles and fluid to be controllably adjusted to achieve a wide range of Theological characteristics. When cured, the presence of the particles also helps improve physical properties such as hardness, modulus, abrasion resistance, refractive index, and the like. The compositions are particularly well-suited for forming printed, radiation cured features on substrates such as paper, signs, walkways, roadways, motor vehicles, boats, aircraft, furniture, equipment, and the like.

U.S. Patent 6,727,295 discloses solvent-free, energy curable low viscosity gravure and non-conductive ink jet inks which contain a pigment; a rheological additive; and an energy curable liquid vehicle which may be a cationic, thermal cationic or a free radical initiated polymerization system, cured by actinic radiation; and optionally containing a photoinitiating system.

Although improvements have been made in energy curable ink formulations, there continues to be a need for energy curable ink formulations (including free radical initiated curable formulations) which have a high color strength, cleaner shade and enhanced gloss but retain a very low viscosity as required by flexographic and ink jet printing.

### SUMMARY OF THE INVENTION

The present invention provides an energy curable ink composition comprising:
(a) a first polymer not compatible with energy curable systems;
(b) a second polymer more compatible than the first polymer with energy curable systems;
(c) a compound with an energy curable functional group; and
(d) a solvent used in energy curable systems.

The present invention also provides A method of preparing an energy curable ink composition comprising:
(a) providing a first polymer not compatible with energy curable systems in a first solvent not compatible with energy curable systems;
(b) adding to said first polymer or forming in said solvent containing first polymer a second polymer more compatible than the first polymer with energy curable systems;
(c) distilling off at least some of the first solvent;
(d) adding a second solvent compatible with energy curable systems; and
(e) adding a compound with an energy curable functional group.

Other objects and advantages of the present invention will become apparent from the following description and appended claims.

### DETAILED DESCRIPTION OF THE INVENTION

It has been surprisingly discovered that the use of a certain polymeric dispersion in energy curable medium provides greater flexibility, scratch resistance, hardness and gloss of the cured film. In addition, the polymeric component also provides heat sealing properties and good lamination performance. The dispersion allows the incorporation of relatively high molecular weight materials without giving rise to high viscosities.

The polymeric dispersion of the present invention is prepared by:
(a) providing a first polymer not compatible with energy curable systems in a first solvent not compatible with energy curable systems;
(b) adding to said first polymer or forming in said solvent containing first polymer a second polymer more compatible than the first polymer with energy curable systems;
(c) distilling off at least some of the first solvent;
(d) adding a second solvent compatible with energy curable systems; and
(e) adding a compound with an energy curable functional group.

Preferably, the first polymer is an ethylene propylene polymer. More preferably, said first polymer is an ethylene/propylene/diene polymer.

Also preferably, the second polymer is a methacrylate polymer and the compound with energy curable functional group is a diacrylate compound, more preferably tripropylene glycol diacrylate.

Again preferably, first solvent is isooctane/n-propyl acetate and the second solvent is ethyl acetate.

The method of the present invention may further comprise curing by actinic radiation or thermal energy such as by a beam of electrons. The method of the present invention may also comprising adding a polymerization initiating system activatable by actinic radiation, and wherein the actinic radiation is ultraviolet radiation.

A non-limiting example on how to prepare the polymeric dispersion of the present invention is as follows. A mixture of BUNA EPT (ethylene/propylene/diene polymer available from Bayer) and Kraton rubbers (hydrogenated styrene/butylene/styrene copolymer) was added to an isooctane/n-propyl acetate solvent blend. Methyl and n-butyl methacrylates were added and polymerized with Trigonox 21 (t-butyl-peroxy-2-ethylhexanoate) and Trigonox 121 (t-amyl-peroxy-2-ethylhexanoate). The solvent was distilled off to a solids level of about 49%. Ethyl acetate was added to bring the solids to about 41%. Tripropylene glycol diacrylate was added to the dispersion and the solvents are distilled off to yield a dispersion of polymer (32%) in the diacrylate.

### Example 1: Dispersion/Polymerization followed by replacement of solvent with energy curable material

n-propyl acetate (313 g) and 109g isooctane (109 g) were added to a one liter flask equipped with a bearing, stirrer, nitrogen inlet, condenser, and thermocouple. The nitrogen inlet was placed subsurface and the nitrogen turned on. The contents were heated to about 86 °C with an oil bath set at about 110 °C. At about 60 °C, BUNA EPT 6470 (81.2 g ethylene/propylene/diene polymer available from Bayer) was added and heating was continued. Forty five minutes after the BUNA was added, Kratong 1650 M (11.8 g hydrogenated styrene/butylene/styrene copolymer) was added at a temperature of about 86 °C. Ten minutes after the Kraton was added, methyl methacrylate (30.1 g) and n-butyl methacrylate (16.6 g) were added. At this point, the sparge was raised to above the surface, the oil bath setting was changed to where the bath will equilibrate at about 93 °C, and the temperature was allowed to drop to 83 °C over a one hour period. One hour after the monomers have been added, and at a temperature of 83 °C, Trigonox 21 (0.16 g) was added. One hour after the first addition of Trigonox 21, more Trigonox 21 (0.08 g) was added at 83 °C. One hour and 45 minutes after that second Trigonox 21 addition, Trigonox 21 (0.21 g)and Trigonox 121 (0.20 g) were added. The temperature was held at 83 °C for 2 hours and 30 minutes, and Trigonox 21 (0.28 g) and Trigonox 121 (0.06 g) are added. The temperature was held at about 83 °C for another 4 hours.

### Distillation:

The solvent was distilled off under vacuum. During the distillation step, the temperature varied between about 68 and 78°C. The distillation was stopped once the solids level rises to 49%.

### Solids adjustment, homogenization and reduction of residual monomer:

At a temperature of about 80 °C, ethyl acetate (40 g) was added. The nitrogen purge was applied, and Trigonox 121 (0.33 g) was added. The dispersion was heated at 83 °C for about 5 hours and then allowed to cool to room temperature. At room temperature, the solids were adjusted further with ethyl acetate. Properties of the dispersion are as follows: Viscosity (Brookfield spindle 4, 60 rpm, 25 °C)= 2030; and Solids% = 41.0%.

### Solvent exchange with energy curable material:

The aforementioned dispersion (198 g) was mixed with tripropyleneglycol diacrylate (166 g), VMCH resin (3.8 g from Dow), and 4-methoxy phenol (0.8 g; MEHQ). The mixture was heated to about 80 °C with an oil bath under an air sparge. At 80 °C, the solvents (propyl acetate, isooctane, and ethyl acetate) were distilled off and the mixture was cooled to room temperature, discharged and filtered. The product was translucent in appearance and had a viscosity of 2700 cP.

### Example 2: Cure of formulations containing various amounts of energy curable dispersion prepared above

Three formulations were prepared as indicated in Table 1 below. Each formulation was coated onto N2A Lenata paper with a number 3 Meyer rod, and cured at 300 watts/inch and 300 ft per minute. The results in Table 1 indicate that the polymeric dispersion as prepared in Example 1 provide better gloss, hardness, flexibility and scratch resistance.

**Table 1 - Formulations containing the polymers prepared according to Example 1 and testing of said formulations**

| | **A** | **B** | **C** |
|---|---|---|---|
| Example 1 Material | 20 g | 30 g | 0 g |
| Fatty acid modified epoxy acrylate | 15 | 15 | 15 |
| Tripropylene glycol diacrylate | 30 g | 20 g | 30 g |
| Di trimethylolpropane triacrylate | 20 g | 20 g | 30 g |
| Monoethanolamine adduct with 1,6 hexanediol diacrylate | 15 g | 15 g | 20 g |
| Benzophenone | 5 g | 5 g | 5 g |
| Daracure 1173 (Ciba Geigy) | 2 g | 2 g | 2 g |
| DC57 (Dow Corning silicone oil) | 1 g | 1 g | 1 g |
| Tego 450 (Degussa silicone oil) | 0.5 g | 0.5 g | 0.5 g |
| Gloss | Excellent | Excellent | Good |
| Hardness | Excellent | Excellent | Fair |
| Flexibility | Excellent | Excellent | Fair |
| Scratch Resistance | Excellent | Excellent | Fair |

The invention has been described in terms of preferred embodiments thereof, but is more broadly applicable as will be understood by those skilled in the art. The scope of the invention is only limited by the following claims.

## Claims

1. An energy curable ink composition comprising:
(a) a first polymer not compatible with energy curable systems, which first polymer is an ethylene propylene polymer;
(b) a second polymer more compatible than the first polymer with energy curable systems, which second polymer is a methacrylate polymer;
(c) a compound with an energy curable functional group; and
(d) a solvent used in energy curable systems.

2. The composition of claim 1, wherein said first and second polymers form a dispersion.

3. The composition of claim 1 or claim 2, wherein said solvent used in energy curable systems is ethyl acetate.

4. The composition of any preceding claim being curable by actinic radiation or thermal energy.

5. The composition of claim 4 further containing a polymerization initiating system activatable by actinic radiation, and wherein the actinic radiation is ultraviolet radiation.

6. An energy cured composition of any preceding claim.

7. A method of preparing an energy curable ink composition comprising:
(a) providing a first polymer not compatible with energy curable systems in a first solvent, which first polymer is an ethylene propylene polymer;
(b) adding to said first polymer or forming in said solvent containing first polymer a second polymer more compatible than the first polymer with energy curable systems, which second polymer is a methacrylate polymer;
(c) distilling off at least some of the first solvent;
(d) adding a second solvent compatible with energy curable systems; and
(e) adding a compound with an energy curable functional group.

8. The method of claim 7, wherein said first and second polymers form a dispersion in the second solvent.

9. The composition of any one of claims 1 to 5 or the method of claim 7 or claim 8, wherein said first polymer is an ethylene/propylene/diene polymer.

10. The composition of any one of claims 1 to 5 or the method of any one of claims 7 to 9, wherein said compound with energy curable functional group is a diacrylate compound.

11. The method of any one of claims 7 to 10, wherein said first solvent is isooctane/n-propyl acetate.

12. The method of any one of claims 7 to 12, wherein said second solvent is ethyl acetate.

13. The method of any one of claims 7 to 12 further comprising curing by actinic radiation or thermal energy.

14. The composition of claim 4 or the method of claim 13, wherein the actinic radiation is a beam of electrons.

15. The method of claim 13 further comprising adding a polymerization initiating system activatable by actinic radiation, and wherein the actinic radiation is ultraviolet radiation.

16. An energy cured composition prepared by the method of any one of claims 7 to 15.

## Patentansprüche

1. Durch Energie härtbare Tintenzusammensetzung, umfassend:
(a) ein erstes Polymer, das nicht mit durch Energie härtbaren Systemen kompatibel ist, wobei das erste Polymer ein Ethylen-Propylen-Polymer ist,
(b) ein zweites Polymer, das mit durch Energie härtbaren Systemen kompatibler als das erste Polymer ist, wobei das zweite Polymer ein Methacrylatpolymer ist,
(c) eine Verbindung mit einer durch Energie härtbaren funktionellen Gruppe, und
(d) ein Lösungsmittel, das in durch Energie härtbaren Systemen verwendet wird.

2. Zusammensetzung nach Anspruch 1, wobei das erste und das zweite Polymer eine Dispersion bilden.

3. Zusammensetzung nach Anspruch 1 oder Anspruch 2, wobei das in durch Energie härtbaren Systemen verwendete Lösungsmittel Ethylacetat ist.

4. Zusammensetzung nach einem vorhergehenden Anspruch, die durch aktinische Strahlung oder thermische Energie härtbar ist.

5. Zusammensetzung nach Anspruch 4, die ferner ein Polymerisationsinitiierungssystem enthält, das durch aktinische Strahlung aktivierbar ist, und wobei die aktinische Strahlung Ultraviolettstrahlung ist.

6. Durch Energie gehärtete Zusammensetzung nach einem vorhergehenden Anspruch.

7. Verfahren zur Herstellung einer durch Energie härtbaren Tintenzusammensetzung, umfassend:
(a) Bereitstellen eines ersten Polymers, das nicht mit durch Energie härtbaren Systemen kompatibel ist, in einem ersten Lösungsmittel, wobei das erste Polymer ein Ethylen-Propylen-Polymer ist,
(b) Zugeben eines zweiten Polymers zum ersten Polymer oder Bilden eines zweiten Polymers in dem Lösungsmittel, welches das erste Polymer enthält, wobei das zweite Polymer mit durch Energie härtbaren Systemen kompatibler als das erste Polymer ist, wobei das zweite Polymer ein Methacrylatpolymer ist,
(c) Abdestillieren wenigstens eines Teils des ersten Lösungsmittels,
(d) Zugeben eines zweiten Lösungsmittels, das mit durch Energie härtbaren System kompatibel ist, und
(e) Zugeben einer Verbindung mit einer durch Energie härtbaren funktionellen Gruppe.

8. Verfahren nach Anspruch 7, wobei das erste und das zweite Polymer eine Dispersion in dem zweiten Lösungsmittel bilden.

9. Zusammensetzung nach einem der Ansprüche 1 bis 5 oder Verfahren nach Anspruch 7 oder Anspruch 8, wobei das erste Polymer ein Ethylen/Propylen/Dien-Polymer ist.

10. Zusammensetzung nach einem der Ansprüche 1 bis 5 oder Verfahren nach einem der Ansprüche 7 bis 9, wobei die Verbindung mit durch Energie härtbarer funktioneller Gruppe eine Diacrylatverbindung ist.

11. Verfahren nach einem der Ansprüche 7 bis 10, wobei das erste Lösungsmittel Isooctan/N-Propylacetat ist.

12. Verfahren nach einem der Ansprüche 7 bis 12, wobei das zweite Lösungsmittel Ethylacetat ist.

13. Verfahren nach einem der Ansprüche 7 bis 12, ferner umfassend das Härten durch aktinische Strahlung oder thermische Energie.

14. Zusammensetzung nach Anspruch 4 oder Verfahren nach Anspruch 13, wobei die aktinische Strahlung ein Elektronenstrahl ist.

15. Verfahren nach Anspruch 13, ferner umfassend das Zugeben eines Polymerisationsinitiierungssystems, das durch aktinische Strahlung aktivierbar ist, und wobei die aktinische Strahlung Ultraviolettstrahlung ist.

16. Durch Energie gehärtete Zusammensetzung, die durch das Verfahren nach einem der Ansprüche 7 bis 15 hergestellt ist.

## Revendications

1. Composition d'encre pouvant durcir grâce à une énergie, comprenant :
(a) un premier polymère non compatible avec des systèmes pouvant durcir grâce à une énergie, lequel premier polymère est un polymère de propylène et d'éthylène ;
(b) un second polymère plus compatible que le premier polymère avec des systèmes pouvant durcir grâce à une énergie, lequel second polymère est un polymère de méthacrylate ;
(c) un composé avec un groupe fonctionnel pouvant durcir grâce à une énergie ; et
(d) un solvant utilisé dans des systèmes pouvant durcir grâce à une énergie.

2. Composition selon la revendication 1, où lesdits premier et second polymères forment une dispersion.

3. Composition selon la revendication 1 ou la revendication 2, où ledit solvant utilisé dans des systèmes pouvant durcir grâce à une énergie est un acétate d'éthyle.

4. Composition selon l'une quelconque des revendications précédentes, pouvant durcir grâce à un rayonnement actinique ou une énergie thermique.

5. Composition selon la revendication 4, contenant en outre un système d'amorçage de polymérisation pouvant être activé par un rayonnement actinique, et où le rayonnement actinique est un rayonnement ultraviolet.

6. Composition durcie grâce à une énergie selon l'une quelconque des revendications précédentes.

7. Procédé de préparation d'une composition d'encre pouvant durcir grâce à une énergie, comprenant les étapes suivantes :
(a) fournir un premier polymère non compatible avec des systèmes pouvant durcir grâce à une énergie dans un premier solvant, lequel premier polymère est un polymère de propylène et d'éthylène ;
(b) ajouter audit premier polymère, ou former dans ledit solvant qui contient le premier polymère, un second polymère plus compatible que le premier polymère avec des systèmes pouvant durcir grâce à une énergie, lequel second polymère est un polymère de méthacrylate ;
(c) récupérer par distillation une partie au moins du premier solvant ;
(d) ajouter un second solvant compatible avec des systèmes pouvant durcir grâce à une énergie ; et
(e) ajouter un composé avec un groupe fonctionnel pouvant durcir grâce à une énergie.

8. Procédé selon la revendication 7, où lesdits premier et second polymères forment une dispersion dans le second solvant.

9. Composition selon l'une quelconque des revendications 1 à 5, ou procédé selon la revendication 7 ou la revendication 8, où ledit premier polymère est un polymère d'éthylène / de propylène / de diène.

10. Composition selon l'une quelconque des revendications 1 à 5, ou procédé selon l'une quelconque des revendications 7 à 9, où ledit composé qui présente un groupe fonctionnel pouvant durcir grâce à une énergie est un composé de diacrylate.

11. Procédé selon l'une quelconque des revendications 7 à 10, où ledit premier solvant est un acétate d'isooctane / de n-propyle.

12. Procédé selon l'une quelconque des revendications 7 à 12, où ledit second solvant est un acétate d'éthyle.

13. Procédé selon l'une quelconque des revendications 7 à 12, comprenant en outre un durcissement grâce à un rayonnement actinique ou à une énergie thermique.

14. Composition selon la revendication 4 ou procédé selon la revendication 13, où le rayonnement actinique est un faisceau d'électrons.

15. Procédé selon la revendication 13, comprenant en outre l'ajout d'un système d'amorçage de polymérisation pouvant être activé par un rayonnement actinique, et où le rayonnement actinique est un rayonnement ultraviolet.

16. Composition durcie grâce à une énergie, préparée grâce au procédé selon l'une quelconque des revendications 7 à 15.
